Europäisches Patentamt

European Patent Office

Office européen des brevets

(11) Publication number: **0 140 913**
**B1**

(12) **EUROPEAN PATENT SPECIFICATION**

(45) Date of publication of patent specification: **04.10.89**

(21) Application number: **84901239.8**

(22) Date of filing: **26.03.84**

(86) International application number:
**PCT/NO84/00017**

(87) International publication number:
**WO 84/03858 11.10.84 Gazette 84/24**

(51) Int. Cl.⁴: **B 29 C 47/08, B 29 C 45/17,
B 29 B 7/58, B 29 B 9/12**

(54) THE USE OF SURFACE-TREATED REINFORCEMENT MATERIAL FOR USE IN EXTRUSION AND INJECTION MOULDING OF THERMOPLASTICS.

(30) Priority: **28.03.83 NO 831132**

(43) Date of publication of application:
**15.05.85 Bulletin 85/20**

(45) Publication of the grant of the patent:
**04.10.89 Bulletin 89/40**

(84) Designated Contracting States:
**DE FR GB SE**

(56) References cited:
**EP-A-0 022 165
DE-A-2 228 199
DE-B-2 340 369
US-A-3 586 560
US-A-4 098 927**

**H. Hermann: "Schneckenmaschinen für das
Aufbereiten von Kunststoffen", Kunststoffe 71
(1981) pages 623-631**

(73) Proprietor: **NORSK HYDRO A/S
Bygdoy Allé 2
N-0257 Oslo 2 (NO)**

(72) Inventor: **DAAE-JOHANSEN, Finn
Asbu
N-3280 Tjodalyng (NO)**
Inventor: **HAGEN, Ole, Kristian
Elgstien 11
N-3710 Siljan (NO)**

(74) Representative: **Wilhelms, Rolf E., Dr. et al
WILHELMS, KILIAN & PARTNER Patentanwälte
Eduard-Schmid-Strasse 2
D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention defined by the claim relates to the use of chopped strand fibre glass in form of collected monofilaments and/or glass fibres as monofilaments suitable for the reinforcement of thermoplastic products to eliminate mechanical wear in extruders and injection moulding machines and to result in a cleaner end product.

It is well-known that the blending of solid additives with plastics results in a high rate of wear in extruders and injection moulding machines.

An article by H. Hermann: "Schneckenmaschinen für das Aufbereiten von Kunststoffen", Kunststoffe 71 (1981), page 623 et seq., describes how mechanical wear in processing machinery can be reduced by adding the fibreglass to the plastic molt in the extruder. This practice reduces the rate of wear but does not eliminate it. The extruder will eventually have to be replaced. To avoid the high cost of complete extruder replacement, some extruders have replaceable units allowing wear-prone parts to be replaced individually.

European patent application No. 0036097 describes a process in which fibreglass (monofilaments), after leaving the spinnerets, is fed into a tank containing a watery solution of polyolefine, silan and bis-maleic acid, whereby the surface of the fibreglass strands are coated, ensuring affinity between the fibreglass and plastic material in the finished product. After this pre-treatment of the fibreglass, and after it has been dried and is moisture free, it must be cut into chopped strand, and then dry-blended with the plastic compound in a known manner, at room temperature. This is a normal and well-known procedure in the plastics industry. The innovation concerns the use of bis-maleic plastic compound.

West German patent No. 2,202,860 describes a method of producing fibreglass reinforced plastic sheeting in which the top layer consists of a special extruded blend of 10 weight percent chopped strand and 90 percent plastic. This fibreglass/plastic blend is produced by the usual process of dry blending before it is poured into the extruder hopper.

U.S. patent No. 3,396,142 relates to a process in which fibreglass is blended with a solid thermoplastic polymer in order to obtain certain properties in the finished product.

EPO patent application No 0 022 165 describes a method for producing a substantially uniform layer of a fibre-reinforced plastic material by rotating moulding. By using glass fibre in a rotation moulding process there will no abrasive or wearing effects on the machinery. The way of coating chopped fibreglass described in this document results in fibres which are equivalent to the type of fibres used in this invention.

Norwegian patent application No. 2042/72 describes a process for plastic coating of endless fibreglass monofilaments which are subsequently collected into endless ribbons of plastic coated fibreglass. The ribbons are then drawn through a heated tube where the plastic strand coating melts, and the strands are fused together. It is mentioned in the application that there is no apparent wear in the heated tube which per se is not surprising since the drawings indicate that the ribbon does not actually come into contact with the tube surface. Reference is also made to the fact that the use of fibreglass causes wear in extruders. It should be noted in this connection that only chopped strand fibreglass is used in extruders and injection moulding equipment, not roving as described in the above Norwegian patent.

There is also a considerable difference between the tube described in the said patent application and an extruder. In an extruder, plastic and additives are subjected to high pressure and temperature when being screw-fed through the extruder and the material is in intensive contact with the cylinder walls and the extruder screw. In the above mentioned tube process, the plastic/fibreglass mass is not screw-fed through the tube, but is drawn freely through by means of an external device. Neither is there any pressure in the tube when fibreglass roving is drawn through it, in contrast to an extruder or injection moulder.

DE—A1—22 28 199 describes the problems of mixing polymers (plastic materials) and fibre glass by use of for examples screw-type extruding machines. The disclosed wear reducing or eliminating effect is not connected to the coating but to the use of a specific economical and simple device. It is disclosed that the normally occurring wear by compounding polymers and glass fibres can be reduced or eliminated if the specific device of this publication is used and at the same time omitting the use of screw-type extruders.

DE—B2—23 40 369 discloses a process in which an additional coating is brought onto the already impregnated bundles of glass fibres and following this step, the bundles of these additionally coated impregnated glass fibres are cut into granular form. The object of this application is directed to enhance the pourability of this product in granular form.

The intention, which is consistent with the present invention, is to obtain a product either with wear-reducing properties, or which will eliminate wear altogether, for use in processing machinery.

The term processing machinery is used above. This is mechanical equipment for the compression and melting of plastic compounds suitable for extruding or injection moulding. Thus, in this context, processing machinery means extrusion and injection moulding equipment for plastics.

It now surprisingly appears that chopped strand fibreglass of suitable length, surface coated in accordance with the aforementioned EPO patent application No 0036097, can be used to advantage to prevent wear in plastic processing machinery.

According to the said patent, such coated fibreglass is produced by heating the chopped strand to 320°C and then blending with PVC compound in a slow mixer, whereby the plastic is sintered to the fibreglass strands. Reference is made to Example 1 in which this production sequence is described.

The raw material used must be thermoplastic. Of such materials, polyamide, polycarbonate, polyacetates, polypropylene, polystyrene, polyacrylnitrile-butadiene-styrene and polyvinylchloride are the most suitable for the purpose, but the invention does not impose limits on choice of thermoplastic material. The only condition is that it must be thermoplastic.

The fibreglass used is of the kind used for plastic reinforcement. It is usual to employ a type of fibreglass whose surface is specially treated by the supplier. Fibreglass is either supplied as roving (endless strands) or as chopped strands. For the production of reinforced plastic, 3 mm is usually considered to be an acceptable length, but the fibre length may be shorter or longer than this. Such chopped strands will usually vary between 1—5 mm.

The present invention is not dependent on the type of fibreglass used being either pure monofilament or roving, since a mixture of both types is normally present in the finished product sold.

For preference collected monofilaments in the form of chopped strand fibreglass should be used. This product is normally surface treated by the manufacturer. Alternatively, the plastics manufacturer may specially treat the fibreglass for his own purposes.

It is of the utmost importance for the coating of the fibreglass that the plastic, or plastic compound, is of the correct granular size. Normal granular distribution for this type of operation is between 5 and 100 µm. If the granules are too large it will not be possible to achieve an even coating of the fibreglass strands. The cost of beating limits the use of very small size granules.

Grain size 5—50 µm is therefore considered to be best suited for the sintering, but larger or smaller grains may be used, as efficient coating is not only dependent on grain size, but also in the length and thickness of the fibres.

When the coated product was used in production it was shown that mechanical wear in the processing machinery was reduced to a minimum and is directly comparable with expected wear when processing pure plastic without the addition of a reinforcing medium.

Reference is made to tables 1 and 2 which illustrate this point.

The invention is pursuant to the patent claim.

## Example 1

Chopped strand fibreglass with an average strand length of 3 mm is pre-heated in a known manner by means of hot air in a suitable apparatus to approx. 160°C. When the fibres reach the correct temperature, they are sprinkled into a tank containing E—PVC compound having a granular distribution of 5—50 µm. The blending ratio is one part fibreglass to one part PVC compound. The compound must be agitated constantly during the sprinkling and sintering process. When the sintering process is completed, the coated fibreglass is separated from the unused E—PVC compound.

## Example 2

Coated fibreglass, produced in accordance with Example 1 is blended with pure thermoplastic granulate in a Göttfert twin screw extruder and the melt is extruded through nozzles in the usual manner. In order to measure the rate of wear in the processing machinery, samples are taken of the extruded material and expressed in iron content in µg Fe per gram material, i.e. ppm.

Blind tests were made using pure PVC granulate (Test No. 1) and granulate containing untreated fibreglass (Test No. 2) and fibreglass coated with titanium tristearin (TTS) (Test No. 3).

In relation to the invention, E—PVC sintered to the fibreglass was used (Test No. 4), E—PVC being a polyvinylchloride produced on the emulsion principle.

TABLE 1

| Test No. | PVC-compound quantity in % | Fibreglass quantity in % | Remarks |
|---|---|---|---|
| 1 | 100 | 0 | |
| 2 | 92 | 8 | 3 mm fibreglass uncoated |
| 3 | 92 | 8 | 3 mm fibreglass TTS-coated |
| 4 | 92 | 8 | 3 mm fibreglass E—PVC-coated |

3

TABLE 2

| Test No. | 1 | 2 | 3 | 4 |
|---|---|---|---|---|
| | | Fe in ppm | | |
| Fe content after extruding | 23 | 320 | 265 | 160 |
| Fe content in fibreglass | 0 | 1770 | 1770 | 1770 |
| Theoretical Fe content according to formula | 25 | 165 | 165 | 165 |
| Fe content related to mechanical wear | 0 | 155 | 100 | 0 |

Table 2 shows that mechanical wear in processing machinery is eliminated when plastic coated fibreglass is used relative to the invention (Test No. 4).

## Claim

Use of chopped strand fibre glass in form of collected monofilaments and/or glass fibres as monofilaments blended with the correct volume of thermoplast in extruders and injection moulding machines, the monofilaments having a length of between 1 and 5 nm, preferably approximately 3 mm and being coated in a method known per se with a thermoplastic polymer, in which method the chopped strand fibre glass is heated to a temperature of between 50 and 300°C, depending on the melting point of the thermoplastic polymer, followed by blending with the thermoplastic polymer having a granular size of between 5 and 100 µm, preferably between 5 and 50 µm, under agitation, whereby the thermoplastic polymer is sintered onto the surface of the fibre glass, to reduce and/or eliminate the high rate of wear normally related to the blending of fibre glass and polymer in extruders and injection moulding machines.

## Patentanspruch

Verwendung von Glasstapelfasern in Form von zusammengefassten Einzelfäden und/oder von Glasfasern als Einzelfäden, die mit einem richtigen Volumen eines Thermoplasten in Extrudierern und Spritzgießmaschinen gemischt werden, wobei die Einzelfäden eine Länge zwischen 1 und 5 mm vorzugsweise annähernd 3 m haben und nach einem an sich bekannten Verfahren mit einem thermoplastischen Polymerisat beschichtet werden, bei welchem Verfahren die Glasstapelfasern auf eine Temperatur zwischen 50 und 300°C in Abhängigkeit vom Schmelzpunkt des thermoplastischen Polymerisats erwärmt werden, anschließend mit dem thermoplastischen Polymerisat vermischt werden, das eine Korngröße zwischen 5 und 100 µm vorzugsweise zwischen 5 und 50 µm hat, was unter Rühren erfolgt, wodurch das thermoplastische Polymerisat auf die Oberfläche der Glasfasern gesintert wird, um das hohe Maß an Verschleiß, das normalerweise mit dem Mischen von Glasfasern und Polymerisaten in Extrudierern und Spritzgießmaschinen verbunden ist, zu verringern und/oder auszuschalten.

## Revendication

Utilisation de fibres de verre à fils coupés sous forme de monofilaments regroupés et/ou des fibres de verre en tant que monofilaments mélangés au volume correct d'un matière synthétique thermoplastique dans des extrudouses et des presses d'injection, les monofilaments ayant une longueur de 1 à 5 mm, de préférence d'environ 3 mm, et étant enrobés par un polymère thermoplastique selon un procédé connu en soi et selon lequel les fibres de verre à fils coupés sont chauffées jusqu'à une température entre 50 et 300°C en fonction du point de fusion du polymère thermoplastique, et ensuite mélangées avec le polymère thermoplastique ayant une grosseur de grain entre 5 et 100 µm, de préférence entre 5 et 50 µm, sous agitation, de sorte que le polymère thermoplastique soit fritté sur la surface des fibres de verre afin de diminuer et/ou éliminer le taux d'usure élevé normalement provoqué par le mélange des fibres de verre et de polymère dans les extrudeuses et presses à injection.